# EUROPEAN PATENT SPECIFICATION

(11) **EP 1 378 142 B1**
(45) Date of publication and mention of the grant of the patent: **12.01.2005**
(21) Application number: 02714238.9
(22) Date of filing: 09.04.2002
(51) Int. Cl.: H04Q 7/38

(54) **METHOD AND SYSTEM FOR USING USE STATUS INFORMATION OF TERMINAL EQUIPMENT**
VERFAHREN UND SYSTEM ZUR VERWENDUNG VON BENUTZUNGSSTATUSINFORMATIONEN VON ENDGERÄTEN
PROCEDE ET SYSTEME PERMETTANT D'UTILISER DES INFORMATIONS D'ETAT D'EQUIPEMENT DE TERMINAL

(30) Priority: 11.04.2001 FI 20010768
(43) Date of publication of application: 07.01.2004
(73) Proprietor: TeliaSonera Finland Oyj, 00510 Helsinki (FI)
(72) Inventor: LINDQVIST, Anssi, FIN-00610 Helsinki (FI); PIPPURI, Sami, FIN-00720 Helsinki (FI); POHJANEN, Petri, FIN-90100 Oulu (FI); RÖNKKÖ, Hannu, FIN-02770 Espoo (FI); KETONEN, Pasi, FIN-02880 Veikkola (FI)
(74) Representative: Simmelvuo, Markku
(86) International application number: PCT/FI2002/000298
(87) International publication number: WO 2002/089517

(56) References cited:
- EP-A2- 0 781 067
- EP-A2- 1 098 489
- WO-A1-00/18166

## Description

### FIELD OF THE INVENTION

The present invention relates to telecommunication technology. The present invention concerns a method and a system for the utilization of operating mode data of a user's terminal.

### BACKGROUND OF THE INVENTION

The users of telecommunication terminals in telecommunication networks and especially mobile communication networks are practically always reachable. The operating mode of mobile stations can be changed e.g. by using so-called profiles. If the user of a terminal is e.g. attending an important meeting, he may have defined a specific "meeting" profile, in which the mobile station is in a silent operating mode and will only alarm on calls coming from predetermined numbers. The profiles associated with a terminal are defined by the user of the terminal by means of the terminal itself.

Reference WO 00/42784 (Peltola et. al.) discloses a solution in which the user can change the state (active/passive) of his line by separately contacting the network and giving corresponding notice to a predetermined server.

Reference WO 97/41654 (Tsoukas et. al.) discloses a solution in which a customer profile associated with the customer is stored in a database provided in the telecommunication network. The customer profile may contain various service requests dependent on time and/or place. The data stored in the customer profile are of a triggering nature. In other words, the customer can define various schedule conditions and limits e.g. for stock prices. When the conditions thus set are met, the server automatically sends to the customer's terminal a corresponding message, e.g. a short message (SMS, Short Message Service) as used in a mobile communication network.

The solution presented in reference WO 97/41654 allows the provision of advertising or services in accordance with the profile defined or the location data. The solution according to this reference does not allow the focus of advertising or services to be applied to the actual state of the terminal, but services are only applied on the basis of information stored beforehand in the profile.

Another solution presented in WO 00/18166 provides a system and method for personalized call treatment, wherein a user's environment is automatically taken into consideration upon establishing a communication by an exchange checking stored contextual information obtained from a member of sensors related to the user.

In connection with a telecommunication network, e.g. a mobile communication network, it is possible to define a reachability management system. The user can define his own profile in the reachability management system and form a reachability chain as he likes. The reachability chain used at any given time has been defined on the basis of rules stored in the profile. The user can also manually set a given reachability chain into an active state by sending a specific message to the reachability management system.

The applications contained in terminals, e.g. mobile stations and PDA devices (PDA, Personal Digital Assistant), are of a static nature, in other words, the applications contained in the terminals are unchangeable. Mobile stations provide fairly limited chances of modifying the properties of the mobile station. Possible modifications are mainly based on user profiles as referred to above. In practice, the user can only change the type of the ringing tone of his mobile station to suit the time and place, but there is no possibility to adapt the variety of applications contained in the terminal to the current situation by changing the applications in use, the user interface or the exterior.

It is possible to provide advertisements and services based on place data or time definitions to a terminal. In a telecommunication network, it is possible to define a user profile on the basis of which advertisements or other services are sent to the user. In the profile, it is possible e.g. to define certain times of the day at which desired information is transmitted to the user's terminal. However, the above-described functionalities do not in any way take into account the actual active state of the terminal.

A specific problem at present is also the fact that the party trying to reach a B-subscriber does not know whether the B-subscriber in question is able to receive a connection set-up request, an advertisement or service. Thus, the party (A-subscriber) trying to contact a terminal user (B-subscriber) has no chance of knowing the state of the terminal or the B-subscriber.

### OBJECT OF THE INVENTION

The object of the invention is to eliminate the above-mentioned drawbacks or at least to significantly alleviate them. A specific object of the invention is to disclose a new type of method and system that will allow versatile utilization of the operating mode data of a user's terminal.

### BRIEF DESCRIPTION OF THE INVENTION

The present invention relates to a method for determining, saving and utilizing terminal operating mode data in a telecommunication system, in which method the user can set his terminal into two or more operating modes. The terminal is preferably a mobile station. According to the invention, the operating mode of the terminal is changed. As a consequence of a change of operating mode, the terminal sends information regarding the change of operating mode to a telecommunication server, using the technique of the telecommunication network available. The information regarding a change of operating mode is sent to the telecommunication server e.g. in a short message or WAP message (WAP, Wireless Application Protocol) as used in the mobile communication network. The telecommunication server saves the operating mode updated by the terminal. The information regarding a change of operating mode is sent to the telecommunication server automatically without any action on the user's part, or alternatively manually by the user. In addition, user-specific data is stored on the telecommunication server. This type of data may include e.g. identity of user and/or terminal, terminal through which the user can be reached at different times, terminal setting data for reaching the user, the type of telecommunication connection available for reaching the user, IP-address of the terminal (IP, Internet Protocol) and terminal location data. The operating mode of the terminal is made available for enquiries from other users by the telecommunication server.

The terminal operating mode data on the telecommunication server are not necessarily automatically public, but the operating mode data can be transmitted to other parties if the user allows it. Operating mode data visible to other users can additionally be divided into different visibility areas e.g. so that the operating mode data is shown with different degrees of accuracy to different parties.

In an embodiment of the invention, a connection is to be established to a user's terminal. The party wishing to establish contact with the user checks the operating mode data browsable by other users to determine the operating mode of the terminal and, after performing this check of the operating mode, makes a decision about establishing a connection to the user's terminal.

In an embodiment of the invention, on the basis of the operating mode data received, information regarding changes in its operating environment is sent to the terminal and the operating environment of the terminal is modified so as to make it consistent with the change information. 'Operating environment' refers e.g. to the applications contained in the terminal and to its user interface. In other words, the applications contained in the terminal and its operating environment are changed in accordance with the operating profile of the terminal. The required applications and information regarding changes are loaded into the terminal from the telecommunication network.

In an embodiment of the invention, the terminal operating mode data is used for directing advertising and/or services to the terminal.

In an embodiment of the invention, identity data identifying the user and/or the terminal is sent to the telecommunication server in connection with the transmission of operating mode data and, based on said identity data, the reachability chain associated with the user reachability management is altered in the telecommunication server so as to render it consistent with the received operating mode of the terminal. In other words, when the user makes a change in the operating profile of his terminal, information regarding the change of operating mode is transmitted to the reachability management system of the telecommunication server. The call control is changed so as to make it consistent with the said reachability chain. A user-specific reachability profile contained in the management system defines which reachability chain is to be used with each operating mode. Changes in the user-specific reachability profile can be made e.g. via a www-user interface.

The invention also relates to a system for determining, storing and utilizing terminal operating mode data in a telecommunication system comprising a telecommunication network, a user's terminal connected to the telecommunication network. According to the invention, the system comprises a telecommunication server for maintaining the active operating mode data of the user's terminal for receiving information regarding a user initiated change in the operating mode of the terminal from the terminal, for saving the operating mode of the terminal, and for making the operating mode of the terminal available for enquiries from other users.

In an embodiment of the invention, the system comprises one or more memorandums containing information about one or more users and/or terminals.

In an embodiment of the invention, the system comprises an application server for the storage of settings regarding the applications and operation associated with different operating modes and for the transmission of the required settings regarding applications and operation to the terminal.

In an embodiment of the invention, the telecommunication server comprises one or more user-specific reachability profiles in which a reachability chain is defined.

In an embodiment of the invention, the system comprises a call control system connected to the telecommunication server and controlling call setup in accordance with the selected reachability chain. The call control system is e.g. an intelligent network (IN, Intelligent Network).

In an embodiment of the invention, the system comprises a call control system connected to the telecommunication server and controlling call setup in accordance with a selected reachability chain. 'Call control system' preferably refers to an intelligent network.

In an embodiment of the invention, the terminal is a mobile station.

The present invention makes it possible for an A-subscriber establishing connection with a B-subscriber to first check the operating mode of the B-subscriber's terminal and only then decide about establishing a connection. Further, the present invention allows the operating environment of the terminal and the applications contained in it to be determined according to the operating profile valid at the time. This provides e.g. the possibility that the terminal may contain different applications during working hours than during leisure.

The present invention makes it possible for advertising and services applied to the user's terminal to be directed according to mode data regarding the user and/or the user's terminal.

The present invention allows an operating mode selection made by the user via his terminal to be used in the control of a reachability management system as well.

### BRIEF DESCRIPTION OF THE DRAWINGS

In the following, the invention will be described in detail by the aid of examples of its embodiments, wherein
Fig. 1 presents a preferred system according to the invention,
Fig. 2 presents a preferred system according to the invention
Fig. 3 presents a preferred system according to the invention
Fig. 4 presents a preferred system according to the invention
Fig. 5 presents a preferred example of a signal flow diagram representing the operation of a system as presented in Fig. 1,
Fig. 6 presents a preferred example of a signal flow diagram representing the operation of a system as presented in Fig. 2.
Fig. 7 presents a preferred example of a signal flow diagram representing the operation of a system as presented in Fig. 3, and
Fig. 8 presents a preferred example of a signal flow diagram representing the operation of a system as presented in Fig. 4.

### DETAILED DESCRIPTION OF THE INVENTION

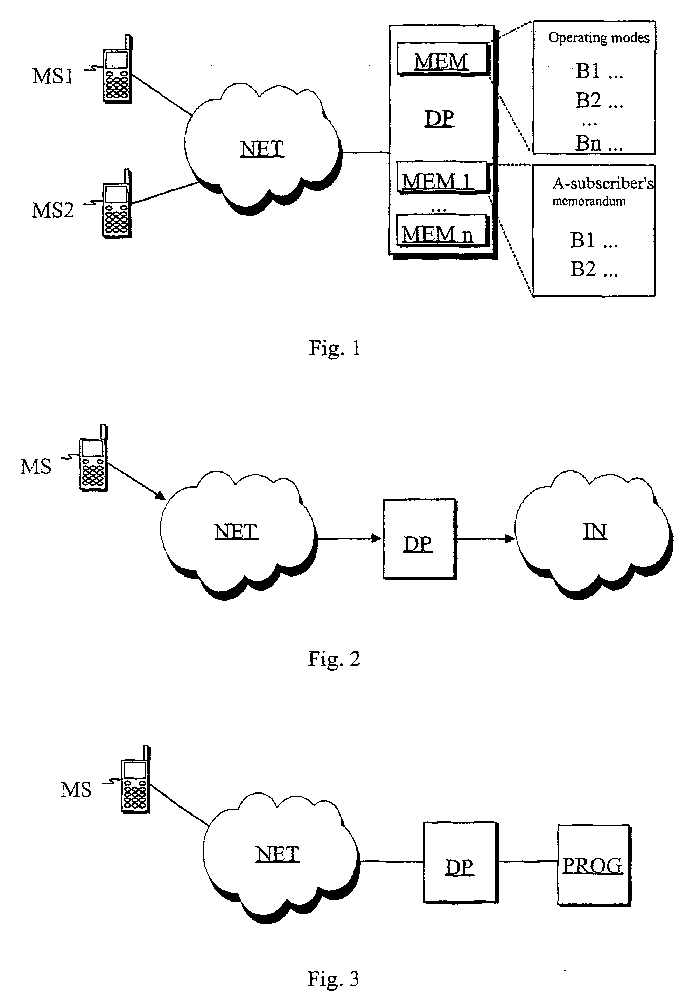

The system presented in Fig. 1 comprises terminals MS1 and MS2, which preferably are mobile stations. The mobile stations are connected to a telecommunication network NET, which preferably is a mobile communication network. Connected to the mobile communication network NET is a telecommunication server DP. The function of the telecommunication server DP is to maintain information regarding the mobile stations that use it and especially to monitor the active operating mode of the mobile station. In this example, 'operating mode' refers to the operating profile of the mobile station. The operating profile may be, for example, "At work", "Having lunch" or "At leisure". The telecommunication server DP comprises a memorandum MEM, in which the operating modes of the mobile stations using it are stored. Additional information regarding the terminal that can be stored in the memorandum includes e.g. the identity of the user and/or the terminal, the type of terminal via which the user is reachable at each particular time, or terminal setting data for reaching the user. Moreover, the memorandum MEM may contain information indicating the type of telecommunication connection over which the user can be reached via his terminal, the IP address of the terminal or location data for the terminal. 'Telecommunication server' DP preferably refers to a server computer provided with the applications necessary for achieving the functionalities provided by the invention.

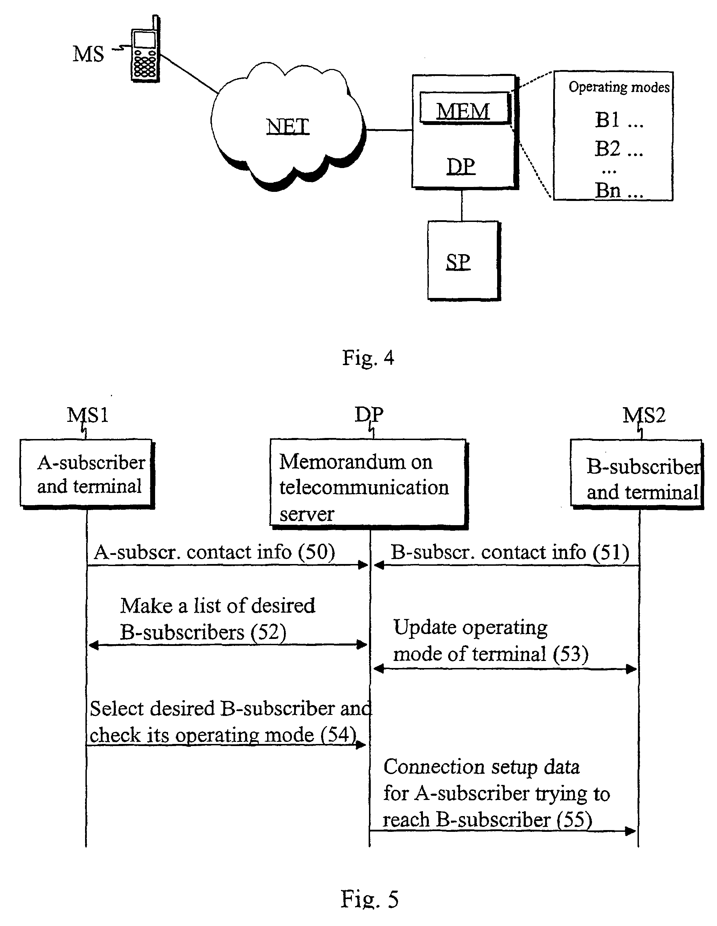

Fig. 5 gives a more detailed description of the operation of the system presented in Fig. 1. The connection between A-subscriber (calling subscriber) and B-subscriber (called subscriber) is set up via the telecommunication server DP. When desirable, the A-subscriber and/or the B-subscriber update their own contact information, arrows 50 and 51, in the telephone memorandum maintained in the telecommunication network. In addition, the A-subscriber can maintain a second memorandum MEM1 of information about B-subscribers known to him, arrow 52. The second memorandum MEM1 is used for the storage of e.g. all contact information concerning B-subscribers, such as telephone numbers, IP numbers, first names etc., arranged and selected by the A-subscriber.

The activity of the memorandum MEM is based on a function in which the memorandum MEM monitors the operating mode of the terminal of each user that makes use of it, using the techniques of the telecommunication network available in each case. The memorandum MEM monitors the state of reachability of the terminal used by the B-subscriber and its level of communication, either automatically or under user control, arrow 53. In this case, the memorandum MEM contains, in addition to contact information regarding the user, e.g. data indicating which terminal can be used to reach him at the moment. Also stored in the memorandum MEM is information giving the current settings in the user's terminal for reaching him. It is further possible to store in the memorandum MEM information indicating the quality of telecommunication network coverage of the user at each moment and his current location.

When the A-subscriber wishes to establish connection with a B-subscriber, the A-subscriber first sets up a connection via a terminal used by him to the second memorandum MEM1 on the telecommunication server DP, where he can browse the operating mode data of desired B-subscribers, arrow 54. According to the example presented in Fig. 1, the memorandum MEM and the second memorandum MEM1 are disposed on the same telecommunication server DP. However, this is only one example of possible arrangements. The second memorandum MEM1 of the A-subscriber may also be placed on a different telecommunication server, which, using client-server type connection software, fetches the information concerning the operating mode of desired B-subscribers into the second memorandum MEM1. After this, the information in the second memorandum MEM1 can be updated automatically e.g. at certain intervals or when certain criteria concerning the state of the telecommunication network are met. The data are updated e.g. when the user's terminal supports telecommunication networks of different types and its data transmission function is transferred e.g. from a GSM network to a WLAN or Bluetooth network (WLAN, Wireless Local Area Network). Alternatively, the A-subscriber may, using an application in the terminal, load the operating mode data associated with B-subscribers into the memory of the terminal, where the A-subscriber can subsequently select a desired person. If there is an accelerometer installed in the B-subscriber's terminal, then it is possible to transmit to the A-subscriber's terminal information indicating whether the terminal specified by the B-subscriber is in use or not. In addition, after connection setup, the accelerometer would provide the A-subscriber with information as to where the B-subscriber is located three-dimensionally.

The A-subscriber can see from the operating mode data for a desired B-subscriber whether the B-subscriber is reachable or not. If the B-subscriber is reachable, then the A-subscriber establishes a connection with the B-subscriber using an application in the terminal via a telephone memorandum provided in the telecommunication network. In connection with the call setup, the B-subscriber receives information regarding the A-subscriber trying to establish connection with him, arrow 55. This information may include e.g. the A-subscriber's name, picture, ringing tone, URL address, etc. in connection with the call setup, the B-subscriber can also be given information regarding the current state of the A-subscriber trying to establish contact. In addition, during the connection, the B-subscriber's terminal can collect information as to which other persons included in the memorandum MEM1 classified by the A-subscriber are located in the vicinity of the B-subscriber. The collection of this information is performed using e.g. a Bluetooth link and the information is transmitted to the A-subscriber via the telecommunication server DP.

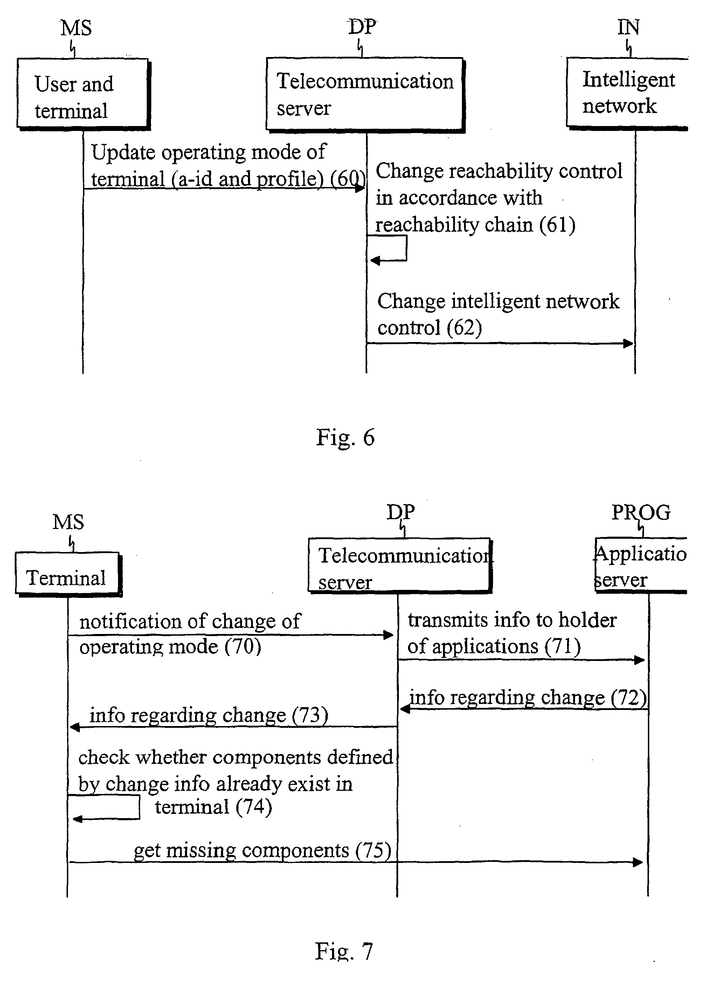

The system represented by Fig. 2 comprises a terminal MS, which preferably is a mobile station. The mobile station MS is connected to a telecommunication network NET, which preferably is a mobile communication network. Connected to the mobile communication network NET is a telecommunication server DP. The telecommunication server DP is provided with a reachability management system. The reachability management system additionally contains a database for the storage of definition data associated with reachability. A connection is provided from the telecommunication server DP to an intelligent network IN. 'Telecommunication server' DP preferably refers to a server computer provided with necessary applications for achieving the functionalities required by the invention. Fig. 6 provides a more detailed description of the operation of a system as illustrated in Fig. 2.

When the user changes his active operating profile in his mobile telephone, e.g. an SMS or WAP message concerning the change of operating mode is transmitted to the telecommunication server DP, arrow 60. The data relating to the updating of the operating mode can be sent to the telecommunication server DP automatically without any action on the user's part when the operating mode of the terminal is changed, or manually by the user. 'Operating mode' here refers e.g. to the operating profile of a mobile station. The operating mode is e.g. "At work", "Having lunch" or "At leisure".

The reachability management system changes the user's reachability in accordance with a reachability profile associated with the mobile telephone, arrow 61. The user can himself enter definitions e.g. via a www user interface as to what sort of mobile telephone profiles a change in the reachability chain is to be associated with and in what way. In a message sent by the user, identity data relating to the user as well as the name of the profile are transmitted. The call control system alters the control of personal reachability in real time in accordance with the defined reachability chain. With a change in the reachability chain, the call control is changed in the intelligent network IN, arrow 62. Although this example represents an actual call control implementation utilizing an intelligent network, other call control implementations may also be used.

The system presented in Fig. 3 comprises a terminal MS, preferably a mobile station. The mobile station is connected to a telecommunication network NET, which preferably is a mobile communication network. Connected to the mobile communication network NET is a telecommunication server DP. The function of the telecommunication server DP is to monitor the currently active operating mode of the terminal. 'Operating mode' here preferably refers to an operating profile, which is e.g. "At work", "Having lunch" or "At leisure". The telecommunication server DP is further connected to an application server PROG. 'Telecommunication server' DP preferably refers to a server computer provided with necessary applications for achieving the functionalities required by the invention. Fig. 7 gives a more detailed description of the operation of the system presented in Fig. 3.

This example illustrates the way in which the management of the applications in the terminal can be tied to place and situation. When the operating mode of the terminal changes, it sends information regarding the change of operating mode to the telecommunication server DP, arrow 70. The change of operating mode is transmitted to the telecommunication server DP automatically without any action on the user's part, or alternatively manually by the user. The telecommunication server DP transmits the change of operating mode to the application server PROG, arrow 71. Based on the information received, the application server PROG determines what changes are to be made in the user's terminal. The application server PROG sends the change information to the telecommunication server DP, which transmits it further to the user's terminal MS, arrows 72 and 73. The user's terminal MS checks whether the components defined by the change information already exist in the terminal, arrow 74. If this is not the case, then the terminal MS will fetch the missing components from the application server PROG, arrow 75.

The above-described example allows the variety of applications in the terminal to be changed so as to make it consistent with the operating profile. If the operating profile of the terminal is "At work", then the variety of applications available to the user of the terminal and/or the user interface are/is different than when the operating profile is "At leisure".

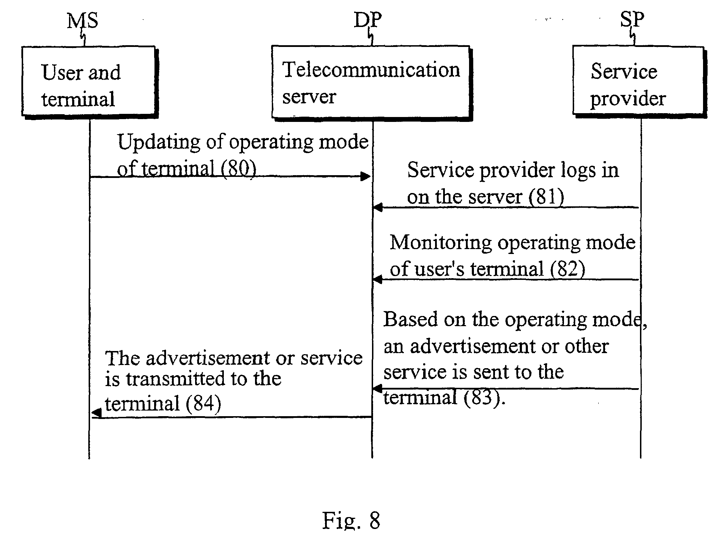

The system illustrated in Fig. 4 comprises a terminal MS, preferably a mobile station. The mobile station is connected to a telecommunication network NET, which preferably is a mobile communication network. Connected to the mobile communication network NET is a telecommunication server DP. The function of the telecommunication server DP is to maintain information regarding the mobile stations that use it and especially to monitor the active operating mode of the mobile station. In this example, 'operating mode' refers to the operating profile of the mobile station. The operating profile may be e.g. "At work", "Having lunch" or "At leisure". The telecommunication server DP comprises a memorandum MEM, in which the operating modes of the mobile stations using it are stored. Additional information regarding the terminal that can be stored in the memorandum includes e.g. the identity of the user and/or the terminal, the type of terminal via which the user is reachable at each particular time, or terminal setting data for reaching the user. Further, the memorandum MEM may contain information indicating the type of telecommunication connection over which the user can be reached via his terminal, the IP address of the terminal or location data for the terminal. One or more service providers SP may establish connection with the telecommunication server DP 'Telecommunication server' DP preferably refers to a server computer provided with the applications necessary for achieving the functionalities provided by the invention. Fig. 8 presents a more detailed description of the operation of the system illustrated in Fig. 4.

This example gives a description of how the operating mode data of the mobile station can be utilized for directing advertising and services to the user's mobile station. When the operating mode of the mobile station is changed, the mobile station sends a notice regarding the change of operating mode to the telecommunication server DP, arrow 80. A change of the operating mode data can be transmitted to the telecommunication server DP automatically without any action on the user's part, or alternatively manually by the user. The user may also give other parties a permission to utilize the operating mode data transmitted by him. A service provider SP utilizing the operating mode data may log in on the telecommunication server DP and monitor the changes of operating mode of a user if the user has given a permission for this, arrows 81 and 82.

The operating mode data to be shown to outside parties can be divided into visibility areas, allowing the operating mode of a user's mobile station to be shown with different degrees of accuracy to different parties. Thus, all service providers will not necessarily receive information of equal accuracy. A service at the place of employment may learn that the user is "At work - Having lunch", whereas others can only see that the user is "At work". Again, a service station may receive the information that the user is "On the way home - in car", so the service station can send a fuel offer to the user's mobile station. There are numerous applications that can be found for the utilization of the operating mode data. On the basis of the operating mode, a service provider SP sends an advertisement or some other service to the user's terminal MS via the telecommunication server DP, arrows 83 and 84.

The method described above makes it possible to transmit to the terminal messages focused according to the state of the user and/or the terminal.

The invention is not restricted to the examples of its embodiments described above; instead, many variations are possible within the scope of the inventive idea defined in the claims.

## Claims

1. Method for determining, storing and utilizing operating mode data of a terminal in a telecommunication system, in which method the user can set his terminal into two or more operating modes,
**characterized in that** the method further comprises steps wherein:
the operating mode of the terminal is changed by the user;
information regarding the change of the operating mode is sent from the terminal to a telecommunication server, using a technique employed in the telecommunication network available; and
the change of the operating mode of the terminal is saved on the telecommunication server and made available for enquiries from other users by the telecommunication server.

2. Method according to claim 1, **characterized in that** the operating mode data existing in the telecommunication server is transmitted into user-specific information browsable by other users.

3. Method according to claim 1 or 2, **characterized in that** the operating mode data browsable by other users is divided into visibility areas.

4. Method according to claim 1, 2 or 3, **characterized in that**, when a connection to the user's terminal is to be established,
the party wishing to establish connection with the user checks the operating mode data browsable by other users to determine the operating mode of the terminal;
after this check of the operating mode, a decision is made about the establishment of the connection to the user's terminal.

5. Method according to claim 1, 2, 3 or 4, **characterized in that** the operating mode data of the terminal is updated in the aforesaid telecommunication server when the user changes the operating profile of his terminal.

6. Method according to claim 1, 2, 3, 4 or 5, **characterized in that** the number of parties to which the aforesaid terminal operating mode data is delivered is limited.

7. Method according to claim 1, **characterized in that** one or more of the following data items are stored in the operating mode data on the telecommunication server:
identity of the user and/or the terminal;
terminal through which the user can be reached at different times;
terminal setting data for reaching the user;
the type of telecommunication connection available for reaching the user;
IP-address of the terminal;
location data of the terminal.

8. Method according to claim 1, **characterized in that** information regarding the operating mode of the terminal is sent from the terminal to the telecommunication server automatically without any action on the user's part when the operating mode of the terminal is changed.

9. Method according to claim 1, **characterized in that** information regarding the operating mode of the terminal is sent from the terminal to the telecommunication server manually by the user when the operating mode of the terminal is changed.

10. Method according to claim 1, 5, 8 or 9, **characterized in that**
based on the operating mode data received, information regarding the changes in its operating environment is sent to the terminal; and
the operating environment of the terminal is changed to make it consistent with the information of change.

11. Method according to claim 10, **characterized in that** the applications in and/or the user interface of the terminal are changed in accordance with the aforesaid change information of change.

12. Method according to claim 1, 2, 3, 4, 5, 6, 7, 8 or 9, **characterized in that** the operating mode data of the terminal is utilized for directing advertising and/or services to the terminal.

13. Method according to claim 1, 5, 8 or 9, **characterized in that**
identity data identifying the user and/or the terminal is sent to the telecommunication server in connection with the transmission of the operating mode data; and
based on said identity data, a reachability chain associated with user reachability management is altered in the telecommunication server so as to render it consistent with the received operating mode of the terminal; and
the call control is changed in accordance with the aforesaid reachability chain.

14. Method according to claim 13, **characterized in that** the reachability chain is defined in a user-specific reachability profile.

15. Method according to claim 1, 13 or 14, **characterized in that** the user's reachability profile is changed via a www-user interface.

16. Method according to claim 1, 2, 3, 4, 5, 6, 7, 8, 9, 10, 11, 12, 13, 14 or 15, **characterized in that** the terminal is a mobile station.

17. Method according to claim 1, 2, 3, 4, 5, 6, 7, 8, 9, 10, 11, 12, 13, 14, 15, or 16, **characterized in that** the information regarding a change of the operating mode of the terminal is transmitted to the telecommunication server in the form of a SMS or WAP message.

18. System for determining, storing and utilizing operating mode data of a terminal in a telecommunication system, the system comprising:
a telecommunication network (NET)
a user's terminal (MS) communicating with the telecommunication network (NET)
**characterized in that** the system further comprises:
a telecommunication server (DP) for receiving information regarding a user initiated change in the operating mode of the terminal from the terminal, for saving the operating mode of the terminal, and for making the operating mode of the terminal available for enquiries from other users.

19. System according to claim 18, **characterized in that** the system comprises one or more memorandums (MEM1, ..., MEMn) containing information about one or more users and/or terminals.

20. System according to claim 18 or 19, **characterized in that** the system comprises an application server (PROG) for the storage of settings regarding applications and operation associated with different operating modes and for the transmission of the required settings regarding applications and operation to the terminal.

21. System according to claim 18, 19 or 20, **characterized in that** the telecommunication server (DP) comprises one or more user-specific reachability profiles in which a reachability chain is defined.

22. System according to claim 18, 19, 20 or 21, **characterized in that** the system comprises a call control system (IN) connected to the telecommunication server (DP) and controlling call setup in accordance with the reachability chain selected.

23. System according to claim 22, **characterized in that** the call control system (IN) is an intelligent network.

24. System according to claim 18, 19, 20, 21, 22 or 23, **characterized in that** the terminal (MS) is a mobile station.

## Patentansprüche

1. Verfahren zum Bestimmen, Speichern und Nutzen von Betriebsart-Daten eines Endgerätes in einem Telekommunikationssystem, bei welchem Verfahren der Nutzer sein Endgerät auf zwei oder mehrere Betriebsarten einstellen kann,
**dadurch gekennzeichnet, dass** das Verfahren ferner folgende Schritte umfasst:
die Betriebsart des Endgerätes wird vom Nutzer geändert;
Information bezüglich der Änderung der Betriebsart wird unter Verwendung einer in dem verfügbaren Telekommunikations-Netzwerk angewendeten Technik von dem Endgerät an einen Telekommunikations-Server geschickt; und
die Änderung der Betriebsart des Endgerätes ist auf dem Telekommunikations-Server gespeichert und wird von dem Telekommunikations-Server für Anfragen von anderen Nutzern zur Verfügung gestellt.

2. Verfahren nach Anspruch 1, **dadurch gekennzeichnet, dass** die auf dem Telekommunikations-Server existierenden Betriebsart-Daten in nutzerspezifische Information übertragen werden, die von anderen Nutzern durchsucht werden kann.

3. Verfahren nach Anspruch 1 oder 2, **dadurch gekennzeichnet, dass** die Betriebsart-Daten, die von anderen Nutzern durchsucht werden können, in Sichtbarkeitsbereiche unterteilt werden.

4. Verfahren nach Anspruch 1, 2 oder 3, **dadurch gekennzeichnet, dass**, wenn eine Verbindung zu dem Endgerät des Nutzers hergestellt werden soll,
die Partei, die die Verbindungsherstellung mit dem Nutzer wünscht, die Betriebsart-Daten, die von anderen Nutzern durchsucht werden können, prüft, um die Betriebsart des Endgerätes zu ermitteln;
nach dieser Prüfung der Betriebsart eine Entscheidung über die Herstellung der Verbindung zum Endgerät des Nutzers getroffen wird.

5. Verfahren nach Anspruch 1, 2, 3 oder 4, **dadurch gekennzeichnet,**
**dass** die Betriebsart-Daten des Endgerätes auf dem obengenannten Telekommunikations-Server aktualisiert werden, wenn der Nutzer das Betriebsprofil seines Endgerätes ändert.

6. Verfahren nach Anspruch 1, 2, 3, 4 oder 5, **dadurch gekennzeichnet,**
**dass** die Anzahl der Parteien begrenzt ist, an die die obengenannten Endgerät-Betriebsart-Daten geliefert werden.

7. Verfahren nach Anspruch 1, **dadurch gekennzeichnet, dass** eines
oder mehrere der folgenden Datenelemente in den Betriebsart-Daten auf dem Telekommunikations-Server gespeichert werden:
Identität des Nutzers und/oder des Endgerätes;
Endgerät, über das der Nutzer zu verschiedenen Zeiten erreichbar ist;
Endgeräteinstelldaten zum Erreichen des Nutzers;
Der Typ der Telekommunikationsverbindung, die zum Erreichen des Nutzers zur Verfügung steht;
IP-Adresse des Endgerätes;
Ortsdaten des Endgerätes.

8. Verfahren nach Anspruch 1, **dadurch gekennzeichnet, dass**
Information bezüglich der Betriebsart des Endgerätes ohne jegliche Aktion von Seiten des Nutzers automatisch von dem Endgerät an den Telekommunikations-Server geschickt wird, wenn die Betriebsart des Endgerätes geändert wird.

9. Verfahren nach Anspruch 1, **dadurch gekennzeichnet, dass** Information bezüglich der Betriebsart des Endgerätes manuell vom Nutzer von dem Endgerät an den Telekommunikations-Server geschickt wird, wenn die Betriebsart des Endgerätes geändert wird.

10. Verfahren nach Anspruch 1, 5, 8 oder 9, **dadurch gekennzeichnet,**
**dass**, basierend auf den empfangenen Betriebsart-Daten, Information bezüglich der Änderungen in deren Betriebsumgebung an das Endgerät geschickt wird; und
die Betriebsumgebung des Endgerätes geändert wird, um sie mit der Änderungsinformation in Übereinstimmung zu bringen.

11. Verfahren nach Anspruch 10, **dadurch gekennzeichnet, dass** die
Anwendungen in dem Endgerät und/oder die Benutzeroberfläche des Endgerätes gemäß der obengenannten Änderungsinformation der Änderung geändert werden.

12. Verfahren nach Anspruch 1, 2, 3, 4, 5, 6, 7, 8 oder 9, **dadurch gekennzeichnet, dass** die Betriebsart-Daten des Endgerätes verwendet werden, um Werbung und/oder Dienstleistungen an das Endgerät zu leiten.

13. Verfahren nach Anspruch 1, 5, 8 oder 9, **dadurch gekennzeichnet, dass** Identitätsdaten, die den Nutzer und/oder das Endgerät identifizieren, in Verbindung mit der Übertragung der Betriebsart-Daten an den Telekommunikations-Server geschickt werden; und
basierend auf besagten Identitätsdaten, eine Erreichbarkeitskette, die in Verbindung mit Nutzererreichbarkeits-Management steht, auf dem Telekommunikations-Server verändert wird, um sie in Übereinstimmung mit der empfangenen Betriebsart des Endgerätes zu bringen; und
die Anrufsteuerung gemäß der oben genannten Erreichbarkeitskette geändert wird.

14. Verfahren nach Anspruch 13, **dadurch gekennzeichnet, dass** die Erreichbarkeitskette in einem nutzerspezifischen Erreichbarkeitsprofil definiert wird.

15. Verfahren nach Anspruch 1, 13 oder 14, **dadurch gekennzeichnet, dass** das Erreichbarkeitsprofil des Nutzers mittels einer www-Benutzeroberfläche geändert wird.

16. Verfahren nach Anspruch 1, 2, 3, 4, 5, 6, 7, 8, 9, 10, 11, 12, 13, 14 oder 15, **dadurch gekennzeichnet, dass** das Endgerät eine Mobilstation ist.

17. Verfahren nach Anspruch 1, 2, 3, 4, 5, 6, 7, 8, 9, 10, 11, 12, 13, 14, 15 oder 16, **dadurch gekennzeichnet, dass** die Information bezüglich einer Änderung der Betriebsart des Endgerätes in Form einer SMS oder WAP-Nachricht auf den Telekommunikations-Server übertragen wird.

18. System zum Bestimmen, Speichern und Nutzen von Betriebsart-Daten eines Endgerätes in einem Telekommunikationssystem, wobei das System umfasst:
ein Telekommunikations-Netzwerk (NET)
ein Nutzerendgerät (MS), das mit dem Telekommunikations-Netzwerk (NET) kommuniziert
**dadurch gekennzeichnet, dass** das System weiterhin umfasst:
einen Telekommunikations-Server (DP) zum Empfangen von Information bezüglich einer vom Nutzer initiierten Änderung in der Betriebsart des Endgerätes vom Endgerät aus, zum Speichern der Betriebsart des Endgerätes und zum zur Verfügung Stellen der Betriebsart des Endgerätes für Anfragen von anderen Nutzern.

19. System nach Anspruch 18, **dadurch gekennzeichnet, dass** das System ein oder mehrere Verzeichnisse (MEM1, ..., MEMn) umfasst, die Information über einen oder mehrere Nutzer und/oder Endgeräte enthalten.

20. System nach Anspruch 18 oder 19, **dadurch gekennzeichnet, dass** das System einen Anwendungs-Server (PROG) zum Speichern von Einstellungen bezüglich Anwendungen und Betrieb, die in Verbindung mit verschiedenen Betriebsarten stehen, und zur Übertragung der erforderlichen Einstellungen bezüglich Anwendungen und Betrieb auf dem Endgerät umfasst.

21. System nach Anspruch 18, 19 oder 20, **dadurch gekennzeichnet, dass** der Telekommunikations-Server (DP) eines oder mehrere nutzerspezifische Erreichbarkeitsprofile umfasst, in denen eine Erreichbarkeitskette definiert ist.

22. System nach Anspruch 18, 19, 20 oder 21, **dadurch gekennzeichnet, dass** das System ein Anrufsteuerungssystem (IN) umfasst, das mit dem Telekommunikations-Server (DP) verbunden ist und die Anrufeinstellung gemäß der ausgewählten Erreichbarkeitskette steuert.

23. System nach Anspruch 22, **dadurch gekennzeichnet, dass** das Anrufsteuerungssystem (IN) ein intelligentes Netzwerk ist.

24. System nach Anspruch 18, 19, 20, 21, 22 oder 23, **dadurch gekennzeichnet, dass** das Endgerät (MS) eine Mobilstation ist.

## Revendications

1. Procédé pour déterminer, mémoriser et utiliser des données de mode de fonctionnement d'un terminal dans un système de télécommunication, dans lequel procédé l'utilisateur peut mettre son terminal dans deux modes de fonctionnement ou davantage,
**caractérisé en ce que** le procédé comprend, en outre, les étapes dans lesquelles :
le mode de fonctionnement du terminal est modifié par l'utilisateur ;
des informations concernant le changement du mode de fonctionnement sont envoyées du terminal à un serveur de télécommunication en utilisant une technique utilisée dans le réseau de télécommunication disponible ; et
le changement du mode de fonctionnement du terminal est sauvegardé sur le serveur de télécommunication et est mis à disposition pour des interrogations par d'autres utilisateurs par le serveur de télécommunication.

2. Procédé selon la revendication 1, **caractérisé en ce que** les données de mode de fonctionnement présentes dans le serveur de télécommunication sont transmises dans des informations spécifiques à un utilisateur pouvant être consultées par d'autres utilisateurs.

3. Procédé selon la revendication 1 ou 2, **caractérisé en ce que** les données de mode de fonctionnement pouvant être consultées par d'autres utilisateurs sont divisées en zones de visibilité.

4. Procédé selon la revendication 1, 2 ou 3, **caractérisé en ce que**, lorsqu'une connexion au terminal de l'utilisateur doit être établie,
le correspondant souhaitant établir une connexion avec l'utilisateur vérifie les données de mode de fonctionnement pouvant être consultées par d'autres utilisateurs afin de déterminer le mode de fonctionnement du terminal ;
après cette vérification du mode de fonctionnement, une décision est prise concernant l'établissement de la connexion avec le terminal de l'utilisateur.

5. Procédé selon la revendication 1, 2, 3 ou 4, **caractérisé en ce que** les données de mode de fonctionnement du terminal sont mises à jour dans le serveur de télécommunication susmentionné lorsque l'utilisateur modifie le profil de fonctionnement de son terminal.

6. Procédé selon la revendication 1, 2, 3, 4 ou 5, **caractérisé en ce que** le nombre de correspondants auxquels les données de mode de fonctionnement de terminal susmentionné sont délivrées est limité.

7. Procédé selon la revendication 1, **caractérisé en ce qu'**un ou plusieurs des éléments de données suivants sont mémorisés dans les données de mode de fonctionnement sur le serveur de télécommunication :
l'identité de l'utilisateur et/ou du terminal ;
le terminal par l'intermédiaire duquel l'utilisateur peut être atteint à différents instants ;
les données de paramètres de terminal pour atteindre l'utilisateur ;
le type de connexion de télécommunication disponible pour atteindre l'utilisateur ;
l'adresse IP du terminal ;
les données d'emplacement du terminal.

8. Procédé selon la revendication 1, **caractérisé en ce que** des informations concernant le mode de fonctionnement du terminal sont envoyées du terminal au serveur de télécommunication automatiquement sans aucune action de la part de l'utilisateur lorsque le mode de fonctionnement du terminal est modifié.

9. Procédé selon la revendication 1, **caractérisé en ce que** des informations concernant le mode de fonctionnement du terminal sont envoyées du terminal au serveur de télécommunication manuellement par l'utilisateur lorsque le mode de fonctionnement du terminal est modifié.

10. Procédé selon la revendication 1, 5, 8 ou 9, **caractérisé en ce que**
sur la base des données de mode de fonctionnement reçues, des informations concernant les changements de son environnement de fonctionnement sont envoyées au terminal ; et
l'environnement de fonctionnement du terminal est modifié afin de le rendre cohérent avec les informations de changement.

11. Procédé selon la revendication 10, **caractérisé en ce que** les applications dans le terminal et/ou l'interface utilisateur du terminal sont modifiées conformément aux informations de changement susmentionnées.

12. Procédé selon la revendication 1, 2, 3, 4, 5, 6, 7, 8 ou 9, **caractérisé en ce que** les données de mode de fonctionnement du terminal sont utilisées pour diriger une publicité et/ou des services vers le terminal.

13. Procédé selon la revendication 1, 5, 8 ou 9, **caractérisé en ce que**
des données d'identité identifiant l'utilisateur et/ou le terminal sont envoyées au serveur de télécommunication en relation avec la transmission des données de mode de fonctionnement ; et
sur la base desdites données d'identité, une chaîne d'accessibilité associée à une gestion d'accessibilité d'utilisateur est modifiée dans le serveur de télécommunication de manière à la rendre cohérente avec le mode de fonctionnement reçu du terminal ; et
le contrôle d'appel est modifié conformément à la chaîne d'accessibilité susmentionnée.

14. Procédé selon la revendication 13, **caractérisé en ce que** la chaîne d'accessibilité est définie dans un profil d'accessibilité spécifique à un utilisateur.

15. Procédé selon la revendication 1, 13 ou 14, **caractérisé en ce que** le profil d'accessibilité de l'utilisateur est modifié par l'intermédiaire d'une adresse www.interface utilisateur.

16. Procédé selon la revendication 1, 2, 3, 4, 5, 6, 7, 8, 9, 10, 11, 12, 13, 14 ou 15, **caractérisé en ce que** le terminal est une station mobile.

17. Procédé selon la revendication 1, 2, 3, 4, 5, 6, 7, 8, 9, 10, 11, 12, 13, 14, 15 ou 16, **caractérisé en ce que** les informations concernant un changement du mode de fonctionnement du terminal sont transmises au serveur de télécommunication sous la forme d'un SMS ou d'un message WAP.

18. Système pour déterminer, mémoriser et utiliser des données de mode de fonctionnement d'un terminal dans un système de télécommunication, le système comprenant :
un réseau de télécommunication (NET)
un terminal d'utilisateur (MS) communiquant avec le réseau de télécommunication (NET)
**caractérisé en ce que** le système comprend en outre :
un serveur de télécommunication (DP) pour recevoir, du terminal, des informations concernant un changement du mode de fonctionnement du terminal lancé par l'utilisateur, pour sauvegarder le mode de fonctionnement du terminal et pour mettre le mode de fonctionnement du terminal à disposition pour des interrogations par d'autres utilisateurs.

19. Système selon la revendication 18, **caractérisé en ce que** le système comprend un ou plusieurs mémorandums (MEM1, ..., MEMn) contenant des informations concernant un ou plusieurs utilisateurs et/ou terminaux.

20. Système selon la revendication 18 ou 19, **caractérisé en ce que** le système comprend un serveur d'applications (PROG) pour la mémorisation de paramètres concernant des applications et un fonctionnement associés à différents modes de fonctionnement et pour la transmission des paramètres requis concernant des applications et un fonctionnement du terminal.

21. Système selon la revendication 18, 19 ou 20, **caractérisé en ce que** le serveur de télécommunication (DP) comprend un ou plusieurs profils d'accessibilité spécifiques à un utilisateur dans lesquels une chaîne d'accessibilité est définie.

22. Système selon la revendication 18, 19, 20 ou 21, **caractérisé en ce que** le système comprend un système de contrôle d'appel (IN) connecté au serveur de télécommunication (DP) et contrôlant l'établissement d'appel conformément à la chaîne d'accessibilité sélectionnée.

23. Système selon la revendication 22, **caractérisé en ce que** le système de contrôle d'appel (IN) est un réseau intelligent.

24. Système selon la revendication 18, 19, 20, 21, 22 ou 23, **caractérisé en ce que** le terminal (MS) est une station mobile.
